# EUROPÄISCHE PATENTSCHRIFT

(11) **EP 0 954 909 B1**
(45) Veröffentlichungstag und Bekanntmachung des Hinweises auf die Patenterteilung: **29.08.2001**
(21) Anmeldenummer: 98922620.4
(22) Anmeldetag: 13.03.1998
(51) Int. Cl.: H04B 1/66

(54) **VERFAHREN ZUM CODIEREN EINES AUDIOSIGNALS**
METHOD FOR CODING AN AUDIO SIGNAL
PROCEDE DE CODAGE D'UN SIGNAL AUDIO

(30) Priorität: 14.07.1997 DE 19730130
(43) Veröffentlichungstag der Anmeldung: 10.11.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: HERRE, Jürgen, D-91054 Buckenhof (DE); GBUR, Uwe, 10827 Berlin (DE); EHRET, Andreas, 90429 Nürnberg (DE); DIETZ, Martin, D-90408 Nürnberg (DE); TEICHMANN, Bodo, D-90427 Nürnberg (DE); KUNZ, Oliver, D-96145 Sesslach (DE); BRANDENBURG, Karlheinz, Dr., D-91054 Erlangen (DE); GERHÄUSER, Heinz, Dr., D-91344 Waischenfeld (DE)
(74) Vertreter: Schoppe, Fritz, Dipl.-Ing.
(86) Internationale Anmeldenummer: EP9801481
(87) Internationale Veröffentlichungsnummer: WO9904506

(56) Entgegenhaltungen:
- EP-A- 0 709 981
- US-A- 4 805 193
- DATABASE INSPEC INSTITUTE OF ELECTRICAL ENGINEERS, STEVENAGE, GB Inspec No. 5215595, ASHIHARA K ET AL: "Separation of speech from noise by using linear prediction in frequency domain" XP002069946 & JOURNAL OF THE ACOUSTICAL SOCIETY OF JAPAN, NOV. 1995, ACOUST. SOC. JAPAN, JAPAN, Bd. 51, Nr. 11, ISSN 0369-4232, Seiten 821-828,

## Beschreibung

Die vorliegende Erfindung bezieht sich auf Verfahren zum Codieren von Audiosignalen und insbesondere auf ein Verfahren zum Codieren eines Audiosignals für den gerade in der Entwicklung befindlichen Standard MPEG-2 AAC.

Der Standardisierungskörper ISO/IEC JTC1/SC29/WG11, der auch als die Moving Pictures Expert Group (MPEG) bekannt ist, wurde 1988 gegründet, um digitale Video- und Audiocodierungsschemen für niedrige Datenraten zu spezifizieren. Im November 1992 wurde die erste Spezifikationsphase durch den Standard MPEG-1 vollendet. Das Audiocodiersystem nach MPEG-1, das in ISO 11172-3 spezifiziert ist, arbeitet in einem Einkanal- oder Zweikanalstereo-Modus bei Abtastfrequenzen von 32 kHz, 44,1 kHz und 48 kHz. Der Standard MPEG-1 Layer II liefert Rundfunkqualität, wie sie durch die International Telecommunication Union spezifiziert ist, bei einer Datenrate von 128 kb/s pro Kanal.

In seiner zweiten Entwicklungsphase bestanden die Ziele von MPEG darin, eine Mehrkanalerweiterung für MPEG-1-Audio zu definieren, die zur existierenden MPEG-1-Systemen rückwärtskompatibel sein sollte, und ebenfalls einen Audiocodierstandard bei niedrigeren Abtastfrequenzen (16 kHz, 22,5 kHz, 24 kHz) als bei MPEG-1 zu definieren. Der rückwärtskompatible Standard (MPEG-2 BC) sowie der Standard mit niedrigeren Abtastfrequenzen (MPEG-2 LSF) wurden im November 1994 vollendet. MPEG-2 BC liefert eine gute Audioqualität bei Datenraten von 640 - 896 kb/s für 5 Kanäle mit voller Bandbreite. Seit 1994 besteht eine weitere Anstrengung des MPEG-2-Audiostandardisierungskommittees darin, einen Multikanalstandard mit höherer Qualität zu definieren, als sie erreichbar ist, wenn eine Rückwärtskompatibilität zur MPEG-1 gefordert wird. Dieser nicht-rückwärtskompatible Audiostandard gemäß MPEG-2 wird als MPEG-2 NBC bezeichnet. Das Ziel dieser Entwicklung besteht darin, Rundfunkqualitäten gemäß den ITU-R-Anforderungen bei Datenraten von 384 kb/s oder darunter für 5-kanalige Audiosignale, bei denen jeder Kanal die volle Bandbreite hat, zu erreichen. Der Audiocodierstandard MPEG-2 NBC wurde April 1997 vollendet. Das Schema MPEG-2 NBC wird den Kern für den bereits geplanten Audiostandard MPEG-4 bilden, welcher höhere Datenraten haben wird (über 40 kb/s pro Kanal). Der NBC oder nicht rückwärts kompatible Standard kombiniert den Codierwirkungsgrad einer hochauflösenden Filterbank, von Prädiktionstechniken und der redundanzreduzierenden Huffman-Codierung, um eine Audiocodierung mit Rundfunkqualität bei sehr niedrigen Datenraten zu erreichen. Der Standard MPEG-2 NBC wird auch als MPEG-2 NBC AAC (AAC = Advanced Audio Coding) bezeichnet. Eine detaillierte Darstellung des technischen Inhalts von MPEG-2 AAC findet sich in M. Bosi, K. Brandenburg, S. Quackenbush, L. Fielder, K. Akagiri, H. Fuchs, M. Dietz, J. Herre, G. Davidson, Yoshiaki Oikawa: "ISO/IEC MPEG-2 Advanced Audio Coding", 101st AES Convention, Los Angeles 1996, Preprint 4382.

Effiziente Audiocodierverfahren entfernen sowohl Redundanzen als auch Irrelevanzen von Audiosignalen. Korrelationen zwischen Audioabtastwerten und Statistiken der Abtastwertdarstellung werden ausgenutzt, um Redundanzen zu entfernen. Frequenzbereichs- und Zeitbereichsmaskierungseigenschaften des menschlichen Gehörsystems werden ausgenutzt, um nichtwahrnehmbare Signalanteile (Irrelevanzen) zu entfernen. Der Frequenzgehalt des Audiosignals wird mittels einer Filterbank in Teilbänder unterteilt. Die Datenratenreduktion wird erreicht, indem das Spektrum des Zeitsignals gemäß psychoakustischen Modellen quantisiert wird, und dieselbe kann ein verlustloses Codierverfahren umfassen.

Allgemein gesagt wird ein zeitkontinuierliches Audiosignal abgetastet, um ein zeitdiskretes Audiosignal zu erhalten.

Das zeitdiskrete Audiosignal wird mittels einer Fensterfunktion gefenstert, um aufeinanderfolgende Blöcke oder Frames mit einer bestimmten Anzahl, z. B. 1024, gefensterter zeitdiskreten Abtastwerten zu erhalten. Nacheinander wird jeder Block von gefensterten zeitdiskreten Abtastwerten des Audiosignals in den Frequenzbereich transformiert, wobei beispielsweise eine modifizierte diskrete Cosinustransformation (MDCT) verwendet werden kann. Die somit erhaltenen Spektralwerte sind noch nicht quantisiert und müssen demnach quantisiert werden. Das Hauptziel dabei besteht darin, die Spektraldaten derart zu quantisieren, daß das Quantisierungsrauschen durch die quantisierten Signale selbst maskiert oder verdeckt wird. Dazu wird ein im MPEG-AAC-Standard beschriebenes psychoakustisches Modell herangezogen, das unter Berücksichtigung der speziellen Eigenschaften des menschlichen Gehörs abhängig von dem vorliegenden Audiosignal Maskierungsschwellen berechnet. Die Spektralwerte werden nun derart quantisiert, daß das eingeführte Quantisierungsrauschen versteckt und somit unhörbar wird. Das Quantisieren führt also zu keinem hörbaren Rauschen.

In dem NBC-Standard wird ein sog. ungleichförmiger Quantisierer verwendet. Zusätzlich wird ein Verfahren verwendet, um das Quantisierungsrauschen zu formen. Das NBC-Verfahren verwendet wie auch vohergegenene Standards die einzelne Verstärkung von Gruppen von Spektralkoeffizienten, welche als Skalenfaktorbänder bekannt sind. Um so effizient wie möglich zu arbeiten, ist es wünschenswert, in der Lage zu sein, das Quantisierungsrauschen in Einheiten zu formen, die an die Frequenzgruppen des menschlichen Gehörsystems möglichst angelehnt sind. Es ist somit möglich, Spektralwerte zu gruppieren, welche die Bandbreite der Frequenzgruppen sehr eng wiedergeben. Einzelne Skalenfaktorbänder können mittels Skalenfaktoren in Stufen von 1,5 dB verstärkt werden. Die Rauschformung wird erreicht, da verstärkte Koeffizienten größere Amplituden haben. Daher werden sie im allgemeinen ein höheres Signal/Rausch-Verhältnis nach der Quantisierung zeigen. Andererseits benötigen größere Amplituden mehr Bits zur Codierung, d. h. die Bitverteilung zwischen den Skalenfaktorbändern wird implizit verändert. Selbstverständlich muß die Verstärkung durch die Skalenfaktoren im Decodierer korrigiert werden. Aus diesem Grund müssen die Verstärkungsinformationen, die in den Skalenfaktoren in Einheiten von 1,5 dB-Schritten gespeichert sind, als Seiteninformationen zu dem Decodierer übertragen werden.

Nach der Quantisierung der in Skalenfaktorbändern vorliegenden ggf. durch Skalenfaktoren verstärkten Spektralwerte sollen dieselben codiert werden. Das Eingangssignal in ein rauschloses Codiermodul ist somit der Satz von beispielsweise 1024 quantisierten Spektralkoeffizienten. Durch das rauschlose Codiermodul werden die Sätze von 1024 quantisierten Spektralkoeffizienten in Abschnitte oder "Sections" eingeteilt, derart, daß eine einzige Huffman-Codiertabelle ("Codebook") verwendet wird, um jeden Abschnitt zu codieren. Aus Codiereffizienzgründen können Abschnittsgrenzen nur an Skalenfaktorbandgrenzen vorhanden sein, derart, daß für jeden Abschnitt oder "Section" des Spektrums sowohl die Länge des Abschnitts in Skalenfaktorbändern als auch die Huffman-Codiertabellennummer, die für den Abschnitt verwendet wird, als Seiteninformationen übertragen werden müssen.

Das Bilden der Abschnitte ist dynamisch und variiert typischerweise von Block zu Block, derart, daß die Anzahl von Bits, die benötigt werden, um den vollen Satz von quantisierten Spektralkoeffizienten darzustellen, minimiert wird. Die Huffman-Codierung wird verwendet, um n-Tupel von quantisierten Koeffizienten darzustellen, wobei der Huffman-Code von einem von 12 Codiertabellen abgeleitet wird. Der maximale absolute Wert der quantisierten Koeffizienten, der von jeder Huffman-Codiertabelle dargestellt werden kann, und die Anzahl von Koeffizienten in jedem n-Tupel für jede Codiertabelle sind a priori festgelegt.

Der Sinn des Bildens der Abschnitte oder Sections besteht also darin, Bereiche mit gleicher Signalstatistik zu gruppieren, um mittels einer einzigen Huffman-Codiertabelle für eine Section einen möglichst hohen Codiergewinn zu erreichen, wobei der Codiergewinn allgemein durch den Quotienten aus Bits vor der Codierung und Bits nach der Codierung definiert ist. Mittels einer Codiertabellennummer ("Codebook-number"), die in der für das NBC-Verfahren verwendeten Bitstromsyntax festgelegt ist, wird auf eine der 12 Huffman-Codiertabellen verwiesen, welche für einen speziellen Abschnitt den höchsten Codiergewinn ermöglicht. Der Ausdruck "Codiertabellennummer" soll in dieser Anmeldung somit den Platz in der Bitstromsyntax bezeichnen, der für die Codiertabellennummer reserviert ist. Um 11 verschiedene Codiertabellennummern binär zu codieren, werden 4 Bit benötigt. Diese 4 Bit müssen für jeden Abschnitt, d. h. für jede Gruppe von Spektralwerten, als Seiteninformationen übertragen werden, damit der Decodierer zum Decodieren die entsprechende korrekte Codiertabelle auswählen kann.

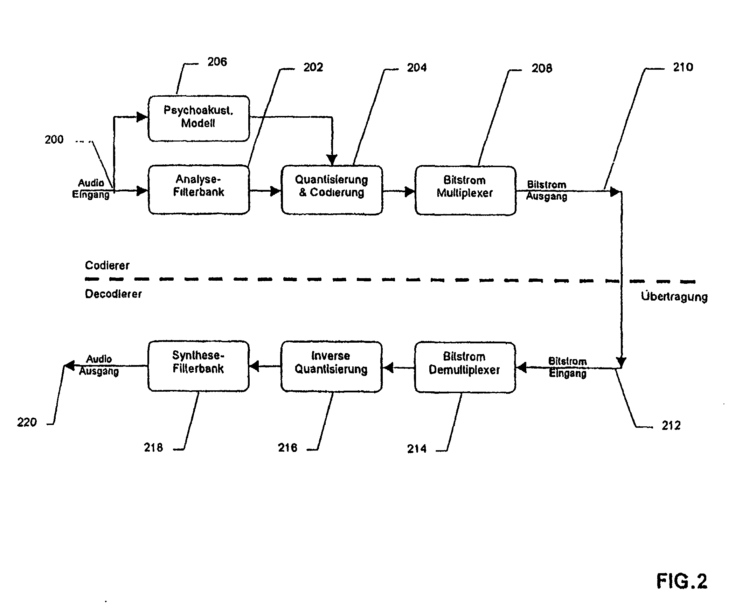

Fig. 2 zeigt eine allgemeine Übersicht über einen Codierer und einen Decodierer, die nach dem beschriebenen Basiskonzept arbeiten. Über einen Audioeingang 200 wird ein vorzugsweise bereits zeitdiskret vorliegendes Audiosignal eingespeist. Das zeitdiskret vorliegende Audiosignal wird nun innerhalb eines Blocks 202, der die Bezeichnung Analysefilterbank trägt, mit einer Fensterfunktion gefenstert, um Blöcke von zeitdiskreten gefensterten Audiosignalen, welche auch als "Frames" bezeichnet werden, zu erhalten. In der Analysefilterbank 202 werden die Blöcke von gefensterten Werten in den Frequenzbereich transformiert. Am Ausgang der Analysefilterbank 202 erscheinen also Spektralwerte, die in einem Block Quantisierung und Codierung 204 zuerst quantisiert und dann beispielsweise mittels einer Huffman-Codierung Redundanz-codiert werden. Aus dem zeitdiskreten Audioeingangssignal am Audioeingang 200 werden ferner mittels eines psychoakustischen Modells 206 Maskierungsinformationen berechnet, die bei der Quantisierung verwendet werden, damit das eingeführte Quantisierungsrauschen zum Quantisieren der Spektralwerte durch dieselben psychoakustisch maskiert oder verdeckt wird. Die quantisierten und codierten Spektralwerte werden bei dem Codierer in einen Bitstrommultiplexer 208 eingespeist, der aus dem quantisierten und Redundanz-codierten Spektralwerten einen Bitstrom bildet, wobei der Bitstrom ferner zur Decodierung erforderliche Seiteninformationen aufweist, wie es für Fachleute bekannt ist. An einem Bitstromausgang 210 liegt der fertig codierte Bitstrom vor, der nun eine codierte Version des Audiosignals am Audioeingang 200 ist. Dieser Bitstrom wird zu einem Decodierer übertragen und in einen Bitstromeingang 212 desselben eingespeist. In dem Bitstromdemultiplexer 214 wird der Bitstrom in Seiteninformationen und quantisierte und codierte Spektralwerte zerlegt, welche in dem Block inverse Quantisierung 216 Redundanz-decodiert und requantisiert werden, um einer Syntesefilterbank 218 zugeführt zu werden, die die am Eingang derselben vorliegenden Spektralwerte wieder in den Zeitbereich transformiert, woraufhin ein codiertes und decodiertes Audiosignal an einem Audioausgang 220 des Decodierers vorliegt. Das am Audioausgang 220 vorliegende zeitdiskrete codierte und decodierte Audiosignal entspricht bis auf eingeführte Codierungsfehler dem ursprünglichen am Audioeingang 200 vorliegenden zeitdiskreten Audiosignal.

Ebenfalls bereits bekannt und in der Technik beschrieben (J. Herre, J. D. Johnston, "Enhancing the Performance of Perceptual Audio Coders by Using Temporal Noise Shaping (TMS)", 101st AES Convention, Los Angeles 1996, Preprint 4384) ist die sog. "Temporal Noise Shaping"-Technik. Die TNS-Technik (TNS = Temporal Noise Shaping = zeitliche Rauschformung) gestattet allgemein gesagt mittels einer prädiktiven Codierung der Spektralwerte eine zeitliche Formung der Feinstruktur des Quantisierungsrauschens. Die TNS-Technik basiert auf einer konsequenten Anwendung des Dualismus zwischen Zeit- und Frequenzbereich. Aus der Technik ist bekannt, daß die Autokorrelationsfunktion eines Zeitsignals, wenn sie in den Frequenzbereich transformiert wird, die spektrale Leistungsdichte eben diesen Zeitsignals angibt. Der duale Fall dazu ergibt sich, wenn die Autokorrelationsfunktion des Spektrums eines Signals gebildet wird und in den Zeitbereich transformiert wird. Die in den Zeitbereich transformierte oder rücktransformierte Autokorrelationsfunktion wird auch als Quadrat der Hilbert-Hüllkurve des Zeitsignals bezeichnet. Die Hilbert-Hüllkurve eines Signals ist somit direkt mit der Autokorrelationsfunktion seines Spektrums verbunden. Die quadrierte Hilbert-Hüllkurve eines Signals und die spektrale Leistungsdichte desselben stellen somit duale Aspekte im Zeitbereich und im Frequenzbereich dar. Wenn die Hilbert-Hüllkurve eines Signals für jedes Teilbandpaßsignal über einem Bereich von Frequenzen konstant bleibt, dann wird auch die Autokorrelation zwischen benachbarten Spektralwerten konstant sein. Dies bedeutet in der Tat, daß die Serie von Spektralkoeffizienten über der Frequenz stationär ist, weshalb prädiktive Codiertechniken effizient verwendet werden können, um dieses Signal darzustellen, und zwar unter Verwendung eines gemeinsamen Satzes von Prädiktionskoeffizienten.

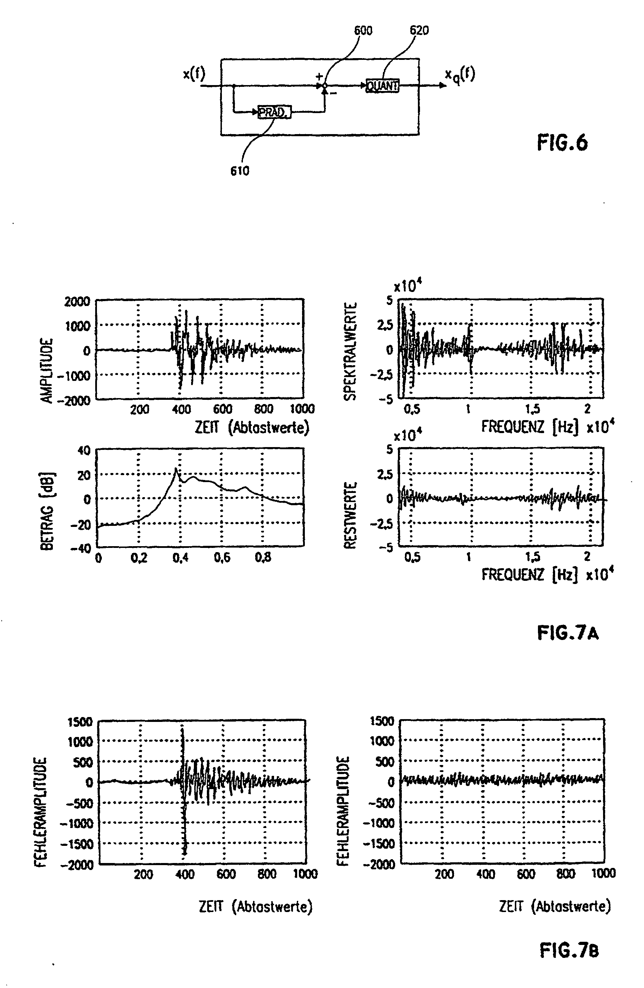

Um diesen Sachverhalt zu veranschaulichen, sei auf die Fig. 5a und 5b verwiesen. Fig. 5a zeigt einen kurzen Ausschnitt aus einem zeitlich stark transienten "Kastagnetten"-Signal einer Dauer von ca. 40 ms. Dieses Signal wurde in mehrere Teilbandpaßsignale zerlegt, wobei jedes Teilbandpaßsignal eine Bandbreite von 500 Hz hat. Fig. 5b zeigt nun die Hilbert-Hüllkurven für diese Bandpaßsignale mit Mittenfrequenzen, die von 1500 Hz bis 4000 Hz reichen. Aus Klarheitsgründen wurden alle Hüllkurven auf ihre Maximalamplitude normiert. Offensichtlich sind die Formen aller Teilhüllkurven sehr stark aufeinander bezogen, weshalb ein gemeinsamer Prädiktor innerhalb dieses Frequenzbereiches verwendet werden kann, um das Signal effizient zu codieren. Ähnliche Beobachtungen können bei Sprachsignalen gemacht werden, bei denen der Effekt der glottalen Erregungspulse über dem gesamten Frequenzbereich aufgrund der Natur des menschlichen Spracherzeugungsmechanismus vorhanden ist.

Fig. 5b zeigt also, daß die Korrelation benachbarter Werte beispielsweise bei einer Frequenz von 2000 Hz ähnlich wie bei beispielsweise einer Frequenz von 3000 Hz bzw. 1000 Hz ist.

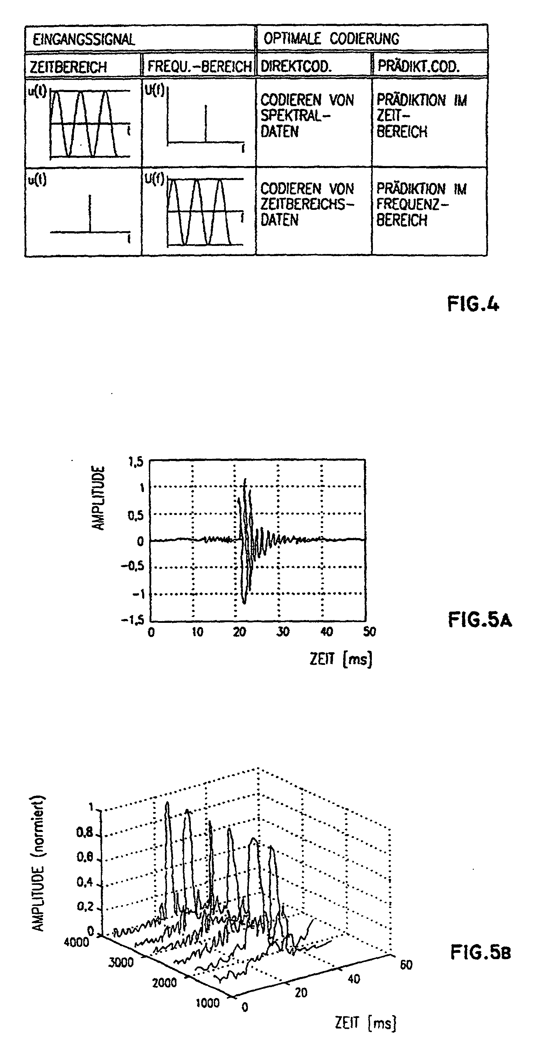

Eine alternative Weise zum Verständnis der Eigenschaft der spektralen Prädiktierbarkeit von transienten Signalen kann aus der in Fig. 4 dargestellten Tabelle erhalten werden. Links oben in der Tabelle ist ein zeitkontinuierliches Signal u(t) gezeigt, das einen sinusförmigen Verlauf hat. Dem ist das Spektrum U(f) dieses Signales gegenübergestellt, das aus einem einzigen Dirac-Impuls besteht. Die optimale Codierung für dieses Signal besteht in der Codierung von Spektraldaten oder Spektralwerten, da hier für das gesamte Zeitsignal lediglich sowohl der Betrag als auch die Phase des Fourrierkoeffizienten übertragen werden braucht, um das Zeitsignal vollständig rekonstruieren zu können. Ein Codieren von Spektraldaten entspricht gleichzeitig einer Prädiktion im Zeitbereich. Eine prädiktive Codierung würde hier also im Zeitbereich stattfinden müssen. Das sinusförmige Zeitsignal hat also eine flache zeitliche Hüllkurve, welche einer maximal nicht flachen Hüllkurve im Frequenzbereich entspricht.

Nun sei der entgegengestzte Fall betrachtet, bei dem das Zeitsignal u(t) ein maximal transientes Signal in der Form eines Dirac-Impulses im Zeitbereich ist. Ein Dirac-Impuls im Zeitbereich entspricht einem "flachen" Leistungsspektrum, während das Phasenspektrum gemäß der zeitlichen Position des Impulses rotiert. Offensichtlich stellt dieses Signal für die oben erwähnten traditionellen Verfahren, wie z. B. die Transformationscodierung oder Codierung von Spektraldaten oder eine lineare Prädiktionscodierung der Zeitbereichsdaten, ein Problem dar. Dieses Signal kann am besten und effektivsten im Zeitbereich codiert werden, da lediglich die zeitliche Position sowie die Leistung des Dirac-Impulses übertragen werden muß, was durch konsequente Anwendung des Dualismus dazu führt, daß auch eine prädiktive Codierung im Frequenzbereich eine geeignetes Verfahren zur effizienten Codierung darstellt.

Es ist sehr wichtig, nicht die prädiktive Codierung von Spektralkoeffizienten über der Frequenz mit dem bekannten dualen Konzept der Prädiktion von Spektralkoeffizienten von einem Block zum nächsten zu verwechseln, das bereits implementiert ist und ebenfalls in dem oben erwähnten Artikel (M. Bosi, K. Brandenburg, S. Quakenbush, L. Fielder, K. Akagiri, H. Fuchs, M. Dietz, J. Herre, G. Davidson, Yoshiaki Oikawa: "ISO/IEC MPEG-2 Advanced Audio Coding", 101st AES Convention, Los Angeles 1996, Preprint 4382) beschrieben ist. Bei der Prädiktion von Spektralkoeffizienten von einem Block zum nächsten, welche einer Prädiktion über der Zeit entspricht, wird die spektrale Auflösung erhöht, während eine Prädiktion von Spektralwerten über der Frequenz die zeitliche Auflösung steigert. Ein Spektralkoeffizient bei beispielsweise 1000 Hz kann also durch den Spektralkoeffizienten bei beispielsweise 900 Hz in demselben Block oder Frame ermittelt werden.

Die dargestellten Überlegungen führten also dazu, ein effizientes Codierverfahren für transiente Signale zu erhalten. Prädiktive Codiertechniken können unter Berücksichtigung der Dualität zwischen Zeit und Frequenzbereich im wesentlichen analog zu der bereits bekannten Prädiktion von einem Spektralkoeffizienten zum Spektralkoeffizienten mit gleicher Frequenz im nächsten Block behandelt werden. Da die spektrale Leistungsdichte und die quadrierte Hilbert-Hüllkurve eines Signals dual zueinander sind, wird eine Reduktion einer Restsignalenergie oder ein Prädiktionsgewinn abhängig von einem Flachheitsmaß der quadrierten Hüllkurve des Signals im Gegensatz zu einem spektralen Flachheitsmaß beim konventionellen Prädiktionsverfahren erhalten. Der potentielle Codierungsgewinn steigt mit transienteren Signalen an.

Als mögliche Prädiktionsschemen bietet sich sowohl das Prädiktionsschema mit geschlossener Schleife, das auch Rückwärtsprädiktion genannt wird, sowie das Prädiktionsschema mit offener Schleife, das auch Vorwärtsprädiktion genannt wird, an. Beim spektralen Prädiktionsschema mit geschlossener Schleife (Rückwärtsprädiktion) ist die Hüllkurve des Fehlers flach. Anders ausgedrückt wird die Fehlersignalenergie gleichmäßig über der Zeit verteilt.

Bei einer Vorwärtsprädiktion, wie sie in Fig. 6 dargestellt ist, tritt jedoch eine zeitliche Formung des durch die Quantisierung eingeführten Rauschens auf. Ein zu prädizierender Spektralkoeffizient x(f) wird einem Summationspunkt 600 zugeführt. Derselbe Spektralkoeffizient wird ferner einem Prädiktor 610 zugeführt, dessen Ausgangssignal mit negativem Vorzeichen ebenfalls dem Summationspunkt 600 zugeführt wird. Das Eingangssignal in einen Quantisierer 620 stellt somit die Differenz des Spektralwerts x(f) und des durch Prädiktion berechneten Spektralwerts xₚ(f) dar. Bei der Vorwärtsprädiktion wird die Gesamtfehlerenergie in den decodierten Spektralkoeffizientendaten gleichbleiben. Die zeitliche Form des Quantisierungsfehlersignals wird jedoch als zeitlich geformt am Ausgang des Decodierers erscheinen, da die Prädiktion auf die Spektralkoeffizienten angewendet wurde, wodurch das Quantisierungsrauschen zeitlich unter das tatsächliche Signal gelegt wird und somit maskiert werden kann. Auf diese Art und Weise werden Probleme der zeitlichen Maskierung z. B. bei transienten Signalen oder Sprachsignalen vermieden.

Dieser Typ der prädiktiven Codierung von Spektralwerten wird daher als die TNS- oder zeitliche Rauschformungstechnik bezeichnet. Zur Veranschaulichung dieser Technik sei auf Fig. 7a verwiesen. Links oben in Fig. 7a befindet sich ein Zeitverlauf eines stark transienten Zeitsignals. Dem Zeitverlauf ist der Ausschnitt eines DCT-Spektrums rechts oben in Fig. 7a gegenübergestellt. Die linke untere Darstellung von Fig. 7 zeigt die resultierende Frequenzantwort eines TNS-Synthesefilters, das durch die LPC-Operation berechnet wurde (LPC = Linear Prediction Coding). Es sein angemerkt, daß die (normierten) Frequenzkoordinaten in diesem Diagramm den Zeitkoordinaten aufgrund der Zeitbereichs- und Frequenzbereichsdualität entsprechen. Offensichtlich führt die LPC-Berechnung zu einem "Quellenmodell" des Eingangssignals, da die Frequenzantwort des LPC-berechneten Synthesefilters der Hüllkurve des stark transienten Zeitsignals ähnelt. In Fig. 7a rechts unten ist eine Darstellung der spektralen Restwerte, d. h. des Eingangssignals des Quantisierers 620 in Fig. 6, über der Frequenz gezeigt. Ein Vergleich zwischen den spektralen Restwerten nach der Prädiktion und den Spektralwerten bei direkter Zeit-Frequenz-Transformation zeigt, daß die spektralen Restwerte eine wesentlich geringere Energie als die ursprünglichen Spektralwerte aufweisen. Bei dem gezeigten Beispiel entspricht die Reduktion der Energie der spektralen Restwerte einem Gesamtprädiktionsgewinn von etwa 12 dB.

Zu der Bedeutung der linken unteren Darstellung in Fig. 7a sei folgendes angemerkt. Bei klassischer Anwendung der Prädiktion auf Zeitbereichssignale ist der Frequenzgang des Synthesefilters eine Annäherung des Betragsspektrums des Eingangssignals. Das Synthesefilter (re)generiert gewissermaßen die spektrale Gestalt des Signals aus einem Restsignal mit näherungsweise "weißem" Spektrum. Bei Anwendung der Prädiktion auf spektrale Signale, wie es bei der TNS-Technik der Fall ist, ist der Frequenzgang des Synthesefilters eine Annäherung der Hüllkurve des Eingangsfilters. Der Frequenzgang des Synthesefilters ist nicht die Fouriertransformierte der Impulsantwort, wie es im klassischen Fall gilt, sondern die inverse Fouriertransformierte. Das TNS-Synthesefilter (re)generiert sozusagen den Hüllkurvenverlauf des Signals aus einem Restsignal mit näherungsweise "weißer" (d. h. flacher) Hüllkurve. So zeigt die linke untere Abbildung von Fig. 7a also die durch das TNS-Synthesefilter modellierte Hüllkurve des Eingangssignals. Diese ist hier eine logarithmische Darstellung der Hüllkurven-Annäherung des im der darüberliegenden Abbildung geziegten Kastagnettensignals.

Anschließend wurde ein Codierungsrauschen in die spektralen Restwerte eingeführt, derart, daß in jedem Codierband mit einer Breite von beispielsweise 0,5 Bark ein Signal/Rauschen-Verhältnis von etwa 13 dB resultierte. Die aus der Einführung des Quantisierungsrauschen resultierenden Fehlersignale im Zeitbereich sind in Fig. 7b gezeigt. Die linke Darstellung in Fig. 7b zeigt das Fehlersignal aufgrund des Quantisierungsrauschens bei verwendeter TNS-Technik, während im rechten Diagramm die TNS-Technik aus Vergleichszwecken nicht verwendet wurde. Wie erwartet ist das Fehlersignal im linken Diagramm nicht gleichmäßig über den Block verteilt, sondern in dem Bereich konzentriert, in dem auch ein hoher Signalanteil vorhanden ist, welcher dieses Quantisierungsrauschen optimal verdecken wird. Im rechten Fall ist dagegen das eingeführte Quantisierungsrauschen gleichmäßig im Block, d. h. über der Zeit, verteilt, was dazu führt, daß im vorderen Bereich, in dem tatsächlich kein oder fast kein Signal ist, ebenfalls Rauschen vorhanden ist, das zu hören sein wird, während in dem Bereich, in dem hohe Signalanteile vorhanden sind, ein relativ kleines Rauschen vorhanden ist, durch das die Markierungsmöglichkeiten des Signals nicht vollständig ausgenützt werden.

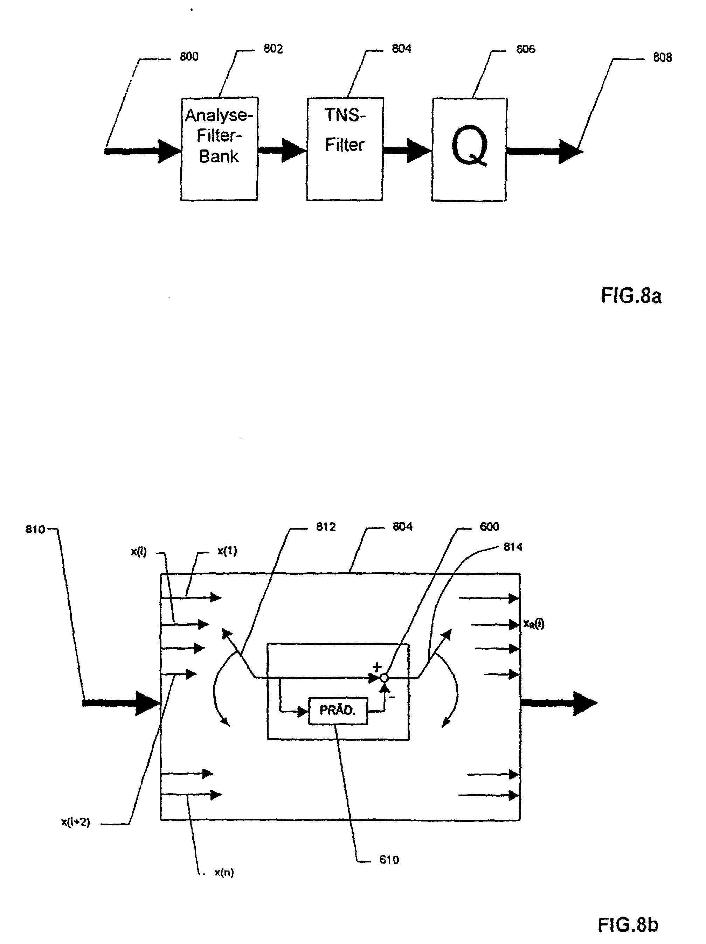

Eine Implementierung eines TNS-Filters 804 in einen Codierer ist in Fig. 8a gezeigt. Derselbe ist zwischen einer Analysefilterbank 802 und einem Quantisierer 806 angeordnet. Das zeitdiskrete Eingangssignal wird bei dem in Fig. 8a gezeigten Codierer in einen Audioeingang 800 eingespeist, während das quantisierte Audiosignal bzw. quantisierte Spektralwerte oder die quantisierten spektralen Restwerte an einem Ausgang 808 ausgegeben werden, dem ein Redunanz-Codierer nachgeschaltet sein kann. Das Eingangssignal wird also in Spektralwerte transformiert. Basierend auf den berechneten Spektralwerten wird eine übliche lineare Prädiktionsrechnung ausgeführt, welche beispielsweise durch Bilden der Autokorrelationsmatrix der Spektralwerte und unter Verwendung einer Levinson-Durbin-Rekursion stattfindet. Fig. 8b zeigt eine detailliertere Ansicht des TNS-Filters 804. An einem Filtereingang 810 werden die Spektralwerte x(1), ..., x(i), ..., x(n) eingespeist. Es kann vorkommen, daß lediglich ein bestimmter Frequenzbereich transiente Signale aufweist, während wiederum ein anderer Frequenzbereich eher stationärer Natur ist. Diese Tatsache wird bei dem TNS-Filter 804 durch einen Eingangsschalter 812 sowie durch einen Ausgangsschalter 814 berücksichtigt, wobei die Schalter zunächst jedoch für eine Parallel-zu-Seriell- bzw. Seriell-zu-Parallel-Wandlung der zu verarbeitenden Daten sorgen. Abhängig davon, ob ein bestimmter Frequenzbereich instationär ist und einen bestimmten Codierungsgewinn durch die TNS-Technik verspricht, wird nur dieser Spektralbereich TNS-verarbeitet, was dadurch geschieht, daß der Eingangsschalter 812 beispielsweise bei dem Spektralwert x(i) startet und z. B. bis zu dem Spektralwert x(i+2) läuft. Der innere Bereich des Filters besteht wieder aus der Vorwärtsprädiktionsstruktur, d. h. dem Prädiktor 610 sowie dem Summationspunkt 600.

Die Berechnung zur Bestimmung der Filterkoeffizienten des TNS-Filters bzw. zur Bestimmung der Prädiktionskoeffizienten wird folgendermaßen durchgeführt. Das Bilden der Autokorrelationsmatrix und das Verwenden der Levinson-Durbin-Rekursion wird für die höchste erlaubte Ordnung des Rauschformungsfilters, z. B. 20, durchgeführt. Wenn der berechnete Prädiktionsgewinn eine bestimmte Schwelle überschreitet, wird die TNS-Verarbeitung aktiviert.

Die Ordnung des verwendeten Rauschformungsfilters für den gegenwärtigen Block wird dann durch anschließendes Entfernen aller Koeffizienten mit einem ausreichend kleinen Absolutwert vom Ende des Koeffizientenarrays bestimmt. Auf diese Art und Weise liegen die Ordnungen von TNS-Filtern üblicherweise in der Größenordnung von 4 - 12 für ein Sprachsignal.

Wenn für einen Bereich von Spektralwerten x(i) beispielsweise ein ausreichend hoher Codierungsgewinn bestimmt wird, wird derselbe verarbeitet, und es wird am Ausgang des TNS-Filters nicht der Spektralwert x(i) sondern der spektrale Restwert x_{R}(i) ausgegeben. Dieser hat eine wesentlich geringere Amplitude als der ursprüngliche Spektralwert x(i), wie es aus Fig. 7a ersichtlich ist. Die zum Decodierer übertragenen Seiteninformationen erhalten somit zusätzlich zu den üblichen Seiteninformationen eine Flag, die die Verwendung von TNS anzeigt, und falls erforderlich, Informationen über den Zielfrequenzbereich und ebenfalls über das TNS-Filter, das zum Codieren verwendet wurde. Die Filterdaten können als quantisierte Filterkoeffizienten dargestellt werden.

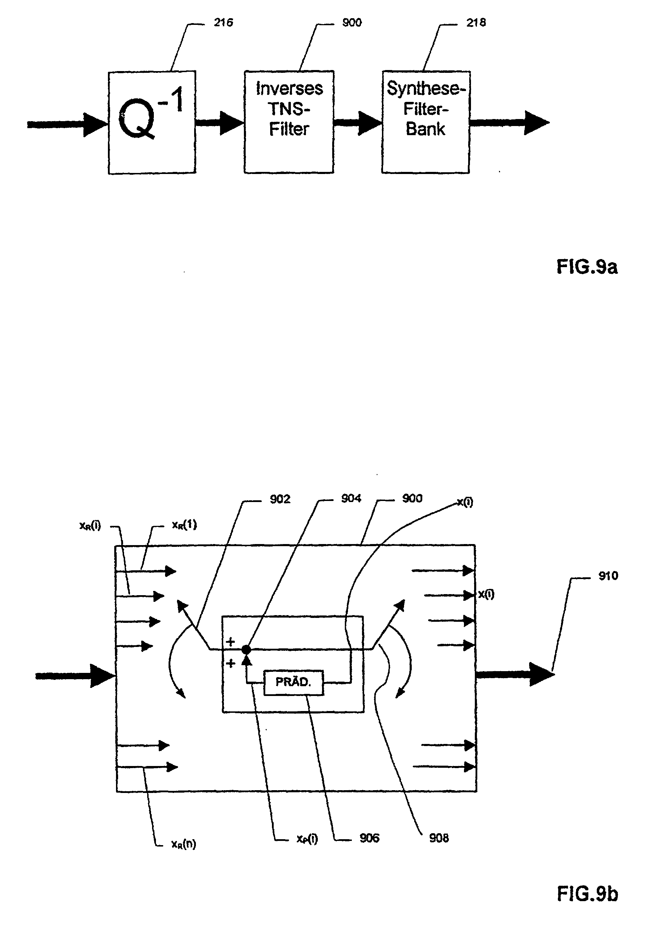

Im Decodierer, welcher in Fig. 9a skizziert ist, wird für jeden Kanal eine TNS-Codierung rückgängig gemacht. Spektrale Restwerte x_{R}(i) werden in dem inversen Quantisierer 216 requantisiert und in ein inverses TNS-Filter 900 eingespeist, dessen näherer Aufbau in Fig. 9b dargestellt ist. Das inverse TNS-Filter 900 liefert als Ausgangssignal wieder Spektralwerte, die in einer Synthesefilterbank 218 in den Zeitbereich transformiert werden. Das TNS-Filter 900 umfaßt wiederum einen Eingangsschalter 902 sowie einen Ausgangsschalter 908, welche zunächst wieder zur Parallel-Seriell-Wandlung bzw. zur Seriell-Paralalel-Wandlung der verarbeiteten Daten dienen. Der Eingangsschalter 902 berücksichtigt ferner einen eventuell verwendeten Zielfrequenzbereich, um nur spektrale Restwerte einer inversen TNS-Codierung zuzuführen, während nicht TNS-codierte Spektralwerte zu einem Ausgang 910 unverändert durchgelassen werden. Das inverse Prädiktionsfilter umfaßt wiederum einen Prädiktor 906 sowie einen Summationspunkt 904. Dieselben sind jedoch im Unterschied zum TNS-Filter folgendermaßen verbunden. Ein spektraler Restwert gelangt über den Eingangsschalter 902 an den Summationspunkt 904, an dem derselbe mit dem Ausgangssignal des Prädiktors 906 summiert wird. Der Prädiktor liefert als Ausgangssignal einen geschätzten Spektralwerts xₚ(i). Der Spektralwert x(i) wird über den Ausgangsschalter an den Ausgang des inversen TNS-Filters ausgegeben. Die TNS-bezogenen Seiteninformationen werden im Decodierer also decodiert, wobei die Seiteninformationen eine Flag umfassen, die die Verwendung von TNS anzeigt, und, falls erforderlich, Informationen bezüglich der Zielfrequenzbereichs. Zusätzlich enthalten die Seiteninformationen ferner die Filterkoeffizienten des Prädiktionsfilters, das zum Codieren eines Blocks oder "Frames" verwendet wurde.

Das TNS-Verfahren läßt sich also folgendermaßen zusammenfassen. Ein Eingangssignal wird in eine spektrale Darstellung mittels einer hochauflösenden Analysefilterbank transformiert. Anschließend wird eine lineare Prädiktion im Frequenzbereich ausgeführt, und zwar zwischen den frequenzmäßig benachbarten, Spektralwerten. Diese lineare Prädiktion kann als Filterprozeß zum Filtern der Spektralwerte interpretiert werden, welcher im Spektralbereich ausgeführt wird. Damit werden die ursprünglichen Spektralwerte durch den Prädiktionsfehler, d. h. durch die spektralen Restwerte, ersetzt. Diese spektralen Restwerte werden ebenso wie übliche Spektralwerte quantisiert und codiert zum Decodierer übertragen, in dem die Werte wieder decodiert und invers quantisiert werden. Vor der Anwendung der inversen Filterbank (Synthesefilterbank) wird eine zur im Codierer vorgenommenen Prädiktion inverse Prädiktion vorgenommen, indem das inverse Prädiktionsfilter auf das übertragene Prädiktionsfehlersignal, d. h. auf die requantisierten spektralen Restwerte, angewendet wird.

Durch die Anwendung dieser Technik ist es möglich, die zeitliche Hüllkurve des Quantisierungsrauschens an die des Eingangssignals anzupassen. Dies erlaubt eine bessere Ausnutzung der Maskierung der Fehlersignale bei Signalen, die eine ausgeprägte Zeitfeinstruktur oder ein ausgeprägtes transientes Wesen haben. Im Falle von transienten Signalen vermeidet die TNS-Technik die sog. "Vorechos", bei denen das Quantisierungsgeräusch bereits vor dem "Anschlag" eines solchen Signals erscheint.

Weiterhin bekannt ist aus der Psychoakustik, daß der Wahrnehmungseindruck von Rauschsignalen primär von deren spektraler Zusammensetzung bestimmt wird und nicht von deren tatsächlicher Signalform. Dies ermöglicht die Benutzung einer sog. Rauschsubstitutionstechnik bei der Datenreduktion von Audiosignalen.

Die "Rauschsubstitution" ist in Donald Schulz: "Improving Audio Codecs by Noise Substitution", Journal of the Audio Eng. Soc., Bd. 44, Nr. 7/8, S. 593 - 598, Juli/August 1996, beschrieben. Wie bereits erwähnt wurde, verwenden herkömmliche Audiocodieralgorithmen üblicherweise Maskierungseffekte des menschlichen Ohrs, um die Datenrate oder die Anzahl von zu übertragenden Bits entscheidend zu reduzieren. Maskierung bedeutet also, daß eine oder mehrere Frequenzkomponenten als Spektralwerte andere Komponenten mit niedrigeren Pegeln unhörbar machen. Dieser Effekt kann auf zwei Arten und Weisen ausgenutzt werden. Zuerst müssen Audiosignalkomponenten, die durch andere Komponenten maskiert werden, nicht codiert werden. Zweitens ist das Einführen von Rauschen durch die eben beschriebene Quantisierung erlaubt, wenn dieses Rauschen durch Komponenten des ursprünglichen Signals verdeckt wird.

Bei rauschhaften Signalen ist das menschliche Gehörsystem nicht in der Lage, den exakten Zeitverlauf eines solchen Signals zu erfassen. Bei üblichen Algorithmen führte dies dazu, daß sogar die Wellenform des weißen Rauschens, welche für das menschliche Gehör nahezu irrelevant ist, codiert wurde. Ein gehörrichtiges Codieren von rauschhaltigen Signalen erfordert daher hohe Bitraten für Informationen, die nicht hörbar sind, wenn keine speziellen Vorkehrungen getroffen werden. Falls jedoch rauschhaltige Komponenten von Signalen erfaßt und mit Informationen über ihre Rauschpegel, über ihren Frequenzbereich oder über ihren zeitlichen Ausdehnungsbereich codiert werden, kann eine solche überflüssige Codierung verringert werden, was zu außerordentlich großen Biteinsparungen führen kann. Diese Tatsache wird durch die Psychoakustik untermauert, die besagt, daß der Wahrnehmungseindruck von Rauschsignalen primär von deren spektraler Zusammensetzung und nicht von der tatsächlichen Wellenform bestimmt wird. Dies ermöglicht also die Benutzung der Rauschsubstitutionstechnik bei der Datenreduktion von Audiosignalen.

Der Codierer steht daher vor der Aufgabe, in dem gesamten Spektrum des Audiosignals rauschartige oder rauschhafte Spektralwerte zu finden bzw. zu erkennen. Eine Definition für rauschhafte Spektralwerte lautet wie folgt: Wenn eine Signalkomponente durch ihren Pegel, durch ihren Frequenzbereich und durch ihren zeitlichen Ausdehnungsbereich derart charakterisiert werden kann, daß sie ohne hörbare Unterschiede für das menschliche Gehörsystem durch ein Rauschersetzungsverfahren rekonstruiert werden kann, wird diese Signalkomponente als Rauschen klassifiziert. Die Erfassung dieser Charakteristik kann entweder im Frequenzbereich oder im Zeitbereich durchgeführt werden, wie es in der zuletzt zitierten Veröffentlichung dargestellt ist. Das einfachste Verfahren besteht beispielsweise darin, tonale, d. h. nicht rauschhafte, Komponenten zu erfassen, indem eine Zeit-Frequenz-Transformation verwendet wird, und indem stationäre Spitzen in zeitlich aufeinanderfolgenden Spektren verfolgt werden. Diese Spitzen werden als tonal bezeichnet, alles andere wird als rauschhaft bezeichnet. Dies stellt jedoch eine relativ grobe Rauscherfassung dar. Eine weitere Möglichkeit, zwischen rauschhaften und tonalen Spektralkomponenten zu unterscheiden, besteht in der Verwendung eines Prädiktors für Spektralwerte in aufeinanderfolgenden Blöcken. Dabei wird eine Prädiktion von einem Spektrum zu dem folgenden Spektrum, d. h. dem Spektrum, das dem nächsten zeitlichen Block oder Frame zugeordnet ist, durchgeführt. Unterscheidet sich ein prädizierter Spektralwert von einem tatsächlich durch Transformation ermittelten Spektralwert des nächsten zeitlichen Blocks oder Frames nicht oder nur wenig, so wird davon ausgegangen, daß es sich bei diesem Spektralwert um eine tonale Spektralkomponente handelt. Daraus kann ein Tonalitätsmaß abgeleitet werden, dessen Wert einer Entscheidung zugrundeliegt, um tonale und rauschhafte Spektralwerte voneinander zu unterscheiden. Dieses Erfassungsverfahren ist jedoch lediglich für streng stationäre Signale geeignet. Es versagt dabei, Situationen zu erfassen, bei denen Sinussignale mit gering veränderten Frequenzen über der Zeit vorhanden sind. Solche Signale erscheinen oft in Audiosignalen, wie z. B. Vibratos, und es ist für den Fachmann offensichtlich, daß diese nicht durch eine rauschhafte Komponente ersetzt werden können.

Eine weitere Möglichkeit zur Erfassung von rauschhaften Signalen besteht in der Rauscherfassung durch Prädiktion im Zeitbereich. Hierfür eignet sich ein angepaßtes Filter als Prädiktor, welcher wiederholt angewendet werden kann, um eine lineare Prädiktion durchzuführen, wie es in der Technik hinreichend bekannt ist. Vergangene Audiosignale werden eingespeist und das Ausgangssignal wird mit dem tatsächlichen Audioabtastwert verglichen. Im Fall eines kleinen Prädiktionsfehlers kann Tonalität angenommen werden. Um den Charakter unterschiedlicher Frequenzregionen zu bestimmen, d. h. um den Spektralbereich zu erfassen, ob eine Gruppe von Spektralwerten eine rauschhafte Gruppe ist, müssen Zeit-Frequenz-Transformationen sowohl des ursprünglichen als auch des prädizierten Signals durchgeführt werden. Dann kann für jede Frequenzgruppe ein Tonalitätsmaß berechnet werden, indem die ursprünglichen und die prädizierten Werte miteinander verglichen werden. Ein Hauptproblem dabei ist der begrenzte dynamische Bereich des Prädiktors. Eine rauschhafte Frequenzgruppe mit einem hohen Pegel dominiert den Prädiktor aufgrund des resultierenden großen Fehlers. Andere Frequenzregionen mit tonalen Komponenten könnten als rauschhaft interpretiert werden. Dieses Problem kann durch Verwendung eines iterativen Algorithmus verringert werden, bei dem das Fehlersignal normalerweise einen geringeren Pegel als das Ursprungssignal hat und wieder durch einen weiteren Prädiktor eingespeist wird, wonach beide prädizierten Signale addiert werden. Weitere Verfahren sind in der Veröffentlichung von Schulz ausgeführt.

Die nun als rauschhaft klassifizierte Gruppe von Spektralwerten wird nicht wie üblich quantisiert und Entropie- bzw. Redundanz-codiert (mittels beispielsweise einer Huffman-Tabelle) zum Empfänger übertragen. Stattdessen wird nur eine Kennung zur Anzeige der Rauschsubstitution sowie ein Maß für die Energie der rauschhaften Gruppe von Spektralwerten als Seiteninformationen übertragen. Im Empfänger werden dann für die substituierten Koeffizienten Zufallswerte (Rauschen) mit der übertragenen Energie eingesetzt. Die rauschhaften Spektralwerte werden also durch Zufallsspektralwerte mit entsprechendem Energiemaß substituiert.

Durch die Übertragung einer einzigen Energieinformation anstelle einer Gruppe von Codes, d. h. mehrerer quantisierter und codierter Spektralwerte, für die quantisierten Spektralkoeffizienten sind erhebliche Dateneinsparungen möglich. Es ist offensichtlich, daß die erreichbaren Datenrateneinsparungen vom Signal abhängen. Handelt es sich z. B. um ein Signal mit sehr wenigen Rauschanteilen, d. h. sehr wenigen rauschhaften Gruppen, oder mit transienten Eigenschaften, so wird eine geringere Datenrateneinsparung möglich sein, als wenn ein sehr verrauschtes Signal mit sehr vielen rauschhaften Gruppen codiert wird.

Der eingangs beschriebene Standard MPEG-2 Advanced Audio Coding (AAC) unterstützt die Möglichkeit der Rauschsubstitution nicht. Die erheblichen Datenrateneinsparungen sind mit dem bisherigen Standard daher nicht möglich.

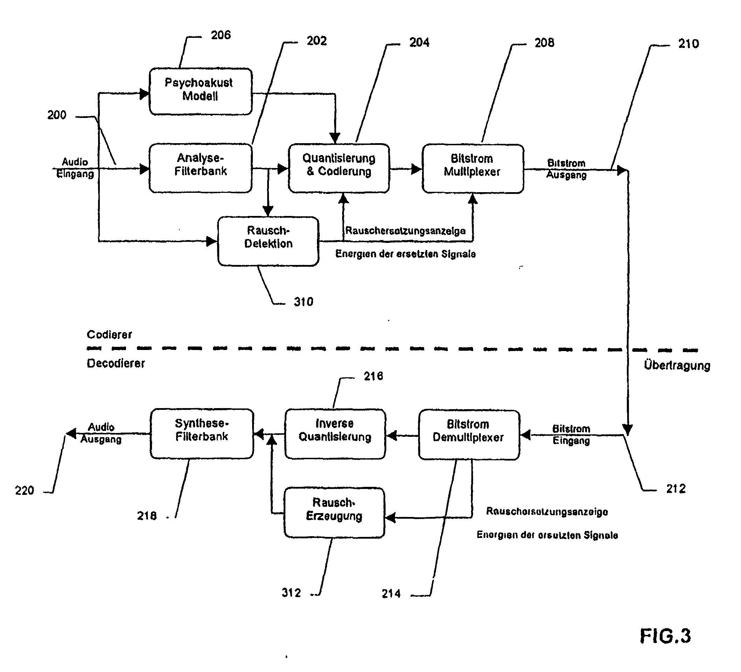

Fig. 3 zeigt wiederum einen Überblick über einen Codierer und einen Decodierer, wobei der Codierer und der Decodierer in Fig. 3 dem beschriebenen Codierer bzw. Decodierer von Fig. 2 entsprichen, wobei jedoch die Rauschsubstitution enthalten ist. An dieser Stelle sei noch einmal betont, daß die in Fig. 3 gezeigte Implementation der Rauschsubstitution nicht zum Stand der Technik gehört, wie es im vorhergehenden Absatz bereits festgestellt wurde. Gleiche Bezugszeichen bezeichnen gleiche Funktionsblöcke. Es ist also zu sehen, daß der Codierer in Fig. 3 lediglich einen neuen Block Rauschdetektion 310 im Vergleich zu Fig. 2 aufweist. Die Rauschdetektion wird mit den Ausgangssignalen, d. h. den Spektralwerten, der Analysefilterbank 202 durchgeführt. Zur Rauschdetektion können jedoch auch die zeitlichen Eingangssignale der Analysefilterbank herangezogen werden, was durch den Pfeil symbolisiert ist, der den Audioeingang 200 mit dem Block Rauschdetektion 310 verbindet. Die Rauschsubstitution erfordert zwei Kategorien von Seiteninformationen, wie es durch die beiden Pfeile symbolisiert ist, die von dem Block Rauschdetektion aus zum Block Quantisierung und Codierung 204 bzw. von dem Block Rauschdetektion 310 aus zu dem Block Bitstrommultiplexer 208 verlaufen. Um ein rauschsubstituiertes codiertes Signal wieder decodieren zu können, muß eine Rauschersetzungsanzeige als Seiteninformationen übertragen werden, welche anzeigt, in welchem Frequenzbereich oder bei einem bevorzugten Verfahren in welchem Skalenfaktorband eine Rauschersetzung durchgeführt wurde. Ferner muß das Maß für die Energie der Spektralwerte in der rauschhaften Gruppe bzw. dem rauschhaften Skalenfaktorband ebenfalls als Seiteninformationen übertragen werden. An dieser Stelle sei darauf hingewiesen, daß rauschsubstituierte Spektralwerte nicht quantisiert und codiert werden, dem Block Quantisierung und Codierung 204 wird also mitgeteilt, daß in einem Skalenfaktorband eine Rauschersetzung vorliegt. Der Bitstrommultiplexer erhält ebenfalls die Rauschersetzungsanzeige sowie als Seiteninformationen das Maß für die Energie der Spektralwerte in einer rauschhaften Gruppe.

Der Decodierer gleicht ebenfalls dem bereits beschriebenen Decodierer in Fig. 2, mit Ausnahme des neuen Blocks Rauschersetzung 312. Der Block Rauschersetzung 312 erhält als Eingangssignals vom Bitstromdemulitplexer 204 die Seiteninformationen Rauschersetzungsanzeige und die Energien der ersetzten Signale, d. h. das Maß für die Energie der Spektralwerte in einer rauschhaften Gruppe bzw. in einem rauschhaften Skalenfaktorband. Der Block Rauschersetzung generiert für die rauschhaften Gruppen bzw. rauschhaften Skalenfaktorbänder Zufalls- oder "Rausch-"Spektralwerte, die der Synthesefilterbank 218 zugeführt werden, um wieder ein codiertes und decodiertes zeitdiskretes Audiosignal zu erhalten. Es ist offensichtlich, daß es für die Synthesefilterbank 218 keine Rolle spielt, ob sie Rausch-Spektralwerte oder "normale" requantisierte Spektralwerte in den Zeitbereich transformiert.

Bei der bekannten Rauschsubstitutionstechnik besteht das Problem, daß Teile des Eingangssignals durch Rauschen substituiert und dann mit nichthörbaren Qualitätseinbußen wieder decodiert werden können, wenn das Eingangssignal eine gleichmäßige Rauschstruktur, d. h. ein ebenes oder flaches Spektrum enthält. Bei transienten Signalen oder Sprachsignalen ist dies nicht gegeben, so daß entweder auf den Einsatz der Rauschsubstitution gänzlich verzichtet werden muß und eine erhöhte Datenrate in Kauf genommen werden muß, oder daß bei trotzdem eingesetzter Rauschsubstitution störende Verfälschungen des Signals entstehen.

Die Aufgabe der vorliegenden Erfindung besteht darin, ein Verfahren zum Codieren bzw. Decodieren von Audiosignalen zu schaffen, das eine hohe Codiereffizienz ermöglicht und doch möglichst keine hörbaren Signalverfälschungen zur Folge hat.

Diese Aufgabe wird durch ein Verfahren zum Codieren gemäß Anspruch 1 sowie durch ein Verfahren zum Decodieren gemäß Anspruch 2 gelöst.

Der vorliegenden Erfindung liegt die Erkenntnis zugrunde, daß eine entsprechende Kombination der TNS-Technik mit der Rauschsubstitution zu einer weiteren Erhöhung des Codierungsgewinns ohne hörbare Signalverfälschungen führt. Die durch die TNS-Verarbeitung entstehenden spektralen Restwerte weisen von sich aus einen wesentlich geringeren Energiegehalt als die ursprünglichen Spektralwerte auf. Das zu den spektralen Restwerten gehörige Signal hat im Vergleich zu dem ursprünglichen Signal einen wesentlich flacheren Verlauf. Durch Prädiktion der Spektralwerte über der Frequenz wird der stark schwankende Verlauf der Hüllkurve von transienten Signalen gewissermaßen extrahiert, wodurch ein Signal mit flacher Hüllkurve zurückbleibt, auf das die Rauschsubstitution erfindungsgemäß angewendet werden kann, um auch bei transienten Signalen erhebliche Biteinsparungen erreichen zu können.

Ein bevorzugtes Ausführungsbeispiel der vorliegenden Erfindung wird nachfolgend bezugnehmend auf die beiliegenden Zeichnungen detaillierter erläutert. Es zeigen:
- Fig. 1: ein Blockdiagramm eines Codierers sowie eines Decodierers gemäß der vorliegenden Erfindung;
- Fig. 2: ein Blockdiagramm, das das Grundkonzept eines bekannten Codierers und Decodierers darstellt;
- Fig. 3: ein Blockdiagramm des in Fig. 2 gezeigten Codierers, der um die Rauschsubstitution erweitert ist;
- Fig. 4: eine Tabelle zur Veranschaulichung der Dualität zwischen dem Zeit- und dem Frequenzbereich;
- Fig. 5a: ein Beispiel für ein transientes Signal;
- Fig. 5b: Hilbert-Hüllkurven von Teilbandpaßsignalen aufgrund des in Fig. 5a gezeigten transienten Zeitsignals;
- Fig. 6: eine Prinzipdarstellung der Prädiktion im Frequenzbereich;
- Fig. 7a: ein Beispiel zur Veranschaulichung der TNS-Technik;
- Fig. 7b: eine Gegenüberstellung des zeitlichen Verlaufs eines eingeführten Quantisierungsrauschens mit (links) und ohne (rechts) TNS-Technik;
- Fig. 8a: eine vereinfachte Blockdarstellung eines Codierers, der ein TNS-Filter aufweist;
- Fig. 8b: eine Detaildarstellung des TNS-Filters von Fig. 8a;
- Fig. 9a: eine vereinfachte Blockdarstellung eines Decodierers, der ein inverses TNS-Filter aufweist; und
- Fig. 9b: eine detailliertere Darstellung des inversen TNS-Filters von Fig. 9a.

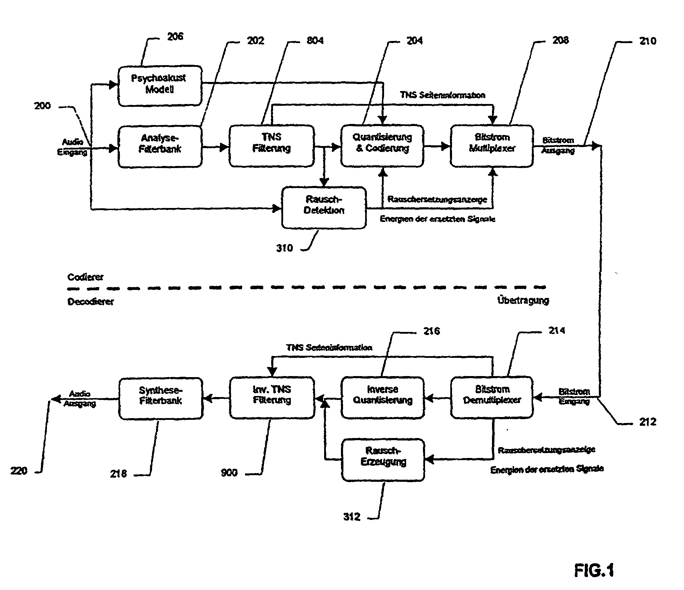

Fig. 1 zeigt einen Codierer und einen Decodierer gemäß der vorliegenden Erfindung. Im Vergleich zu dem in Fig. 3 beschriebenen Codierer enthält der erfindungsgemäße Codierer aus Fig. 1 eine Kombination der TNS-Filterung und der Rauschsubstitution. Im Gegensatz zum bekannten Codierer, der eine Rauschsubstitution von Spektralwerten durchführt, wird bei dem in Fig. 1 gezeigten Codierer zusätzlich eine Rauschsubstitution der spektralen Restwerte am Ausgang des TNS-Filters 804 ausgeführt. In Gruppen von spektralen Restwerten oder Skalenfaktorbändern mit spektralen Restwerten wird bei der Rauschsubstitution ein Maß für die Energie der spektralen Restwerte in einer Gruppe oder in einem Skalenfaktorband ermittelt und eine Rauschersetzungsanzeige zum Quantisierer und Codierer 204 sowie Bitstrommultiplexer 208 in Analogie zu einer Rauschsubstitution für ursprüngliche Spektralwerte ausgeführt.

Im Decodierer findet wiederum der entgegengesetzte analoge Prozeß statt. Der Bitstromdemultiplexer 214 leitet TNS-Seiteninformationen zu dem inversen TNS-Filter. Diese TNS-Seiteninformationen sind, wie bereits mehrmals erwähnt, die Prädiktionskoeffizienten bzw. Filterkoeffizienten des TNS-Filters, eine Anzeige bezüglich des Zielfrequenzbereichs, wenn die TNS-Verarbeitung frequenzselektiv ausgeführt wurde, sowie eine Flag, die anzeigt, wo die TNS-Technik aktiviert war oder nicht.

Vom Bitstromdemultiplexer werden ferner die Rauschersetzungsanzeige sowie die Maße für die Energien der ersetzten Spektralwerte oder spektralen Restwerte in den entsprechenden Skalenfaktorbändern zu dem Rauscherzeugungsblock 312 geleitet. Der Rauscherzeugungsblock 312 erzeugt, unabhängig davon, ob es sich um rauschsubstituierte Spektralwerte oder rauschsubstituierte spektrale Restwerte handelt, Rausch-Spektralwerte, welche in das inverse TNS-Filter 900 eingegeben werden. Das inverse TNS-Filter läßt nicht-TNS-verarbeitete Spektralwerte, seien sie tonaler Natur oder seien sie Rausch-Spektralwerte, unverändert passieren. Spektrale Restwerte werden dagegen wieder TNS-rückverarbeitet, damit die Synthesefilterbank 218 ein codiertes und wieder decodiertes zeitdiskretes Audiosignal am Audioausgang 220 ausgeben kann.

Im nachfolgenden sei auf die Rauschdetektion im Vergleich von Spektralwerten zu spektralen Restwerten eingegangen. Wie es bereits eingangs erwähnt würde, sind in der Schrift von Schulz mehrere Methoden zum Erfassen von Rauschbereichen in Spektralwerten dargestellt. Diese Verfahren können allein auf den Spektralwerten selbst oder auch auf dem zeitdiskreten Audiosignal allein oder sowohl auf dem zeitdiskreten Audiosignal als auch auf den Spektralwerten des zeitdiskreten Audiosignals basieren. Dies ist in Fig. 1 sowie in den Fig. 2 und 3 durch den Pfeil symbolisiert, der den Audioeingang 200 mit dem Block Rauschdetektion verbindet.

Zusammenfassend lautet das Verfahren der vorliegenden Erfindung wie folgt. Im Codierer wird die zeitliche Feinstruktur des Signals durch die TNS-Filterung "herausgenommen". Das Restspektrum bzw. die spektralen Restwerte entsprechen somit einer amplitudenmäßig "equalisierten" Version des zeitdiskreten Audiosignals am Eingang des Codierers, wobei das Residualspektrum, das die spektralen Restwerte aufweist, eine näherungsweise konstante Einhüllendenstruktur besitzt. Die Informationen über den ursprünglichen Hüllkurvenverlauf sind in den Filterkoeffizienten des TNS-Filters, das durch lineare Prädiktion erhalten wird, enthalten, wobei diese Informationen als Seiteninformationen zum Decodierer übertragen werden.

Auf das zeitlich näherungsweise konstante Residualspektrum, das die spektralen Restwerte umfaßt, kann nun eine Rauschsubstitution in Analogie zur Rauschsubstitution auf nicht-TNS-verarbeitete Spektralwerte angewendet werden. Entsprechende Seiteninformationen (Anzeige der ersetzten Frequenzbänder und Bandenergien) werden zum Decodierer als Seiteninformationen übermittelt. Im Decodierer findet der bekannte Decodierungsprozeß für nichtrauschersetzte und rauschersetzte Frequenzbänder statt. Das durch die Rauschsubstitution eingesetzte Rauschen besitzt keine zeitliche Feinstruktur, es hat also eine etwa flache zeitliche Hüllkurve. Bei der nachfolgenden inversen TNS-Filterung wird die Original-Zeitfeinstruktur entsprechend der übertragenen TNS-Seiteninformationen wieder in das Signal eingeführt, bevor die Spektralwerte mittels der Synthesefilterbank wieder in den Zeitbereich transformiert werden.

Somit ermöglicht die Kombination der Verfahrensschritte der Rauschsubstitution und des "Temporal Noise Shaping" eine verbesserte Rauschsubstitution, welche auch für Signale mit zeitlicher Feinstruktur wirkungsvoll eingesetzt werden kann, wobei aufgrund des TNS-Verfahrens das eingeführte Quantisierungsrauschen zeitlich geformt und damit "unter" das zeitliche Signal gepackt wird.

## Patentansprüche

1. Verfahren zum Codieren eines Audiosignals mit folgenden Schritten:
Transformieren (202) eines zeitlichen Audiosignais in den Frequenzbereich, um Spektralwerte (x(1), ..., x(n)) des zeitlichen Audiosignais zuerhalten;
Durchführen einer Prädiktion der Spektralwerte über der Frequenz (804), um spektrale Restwerte (X_{R}(1), ..., x_{R}(n)) zu erhalten;
Erfassen (310) von Rauschbereichen in den spektralen Restwerten;
Rausch-Substituieren (310) der spektralen Restwerte in den Rauschbereichen; und
Einbringen (208) von Informationen bezüglich der Rauschbereiche sowie der Rauschsubstitution in Seiteninformationen eines codierten Audiosignals.

2. Verfahren zum Decodieren eines codierten Audiosignals, mit folgenden Schritten:
Empfangen (212) des codierten Audiosignals;
Erfassen (214) von Informationen in den Seiteninformationen, die sich auf eine Rauschsubstitution und auf Rauschbereiche der spektralen Restwerte beziehen;
Erzeugen (312) von spektralen Rausch-Restwerten aufgrund der erfaßten Informationen in den Rauschbereichen;
Durchführen einer inversen Prädiktion (900) über der Frequenz, um aus den rauschsubstituierten spektralen Rausch-Restwerten Spektralwerte zu erhalten; und
Transformieren (218) der Spektralwerte in den Zeitbereich, um ein decodiertes Audiosignal zu erhalten.

3. Verfahren nach Anspruch 1 oder 2, bei dem die Prädiktion (804) bzw. inverse Prädiktion (900) nur für einen bestimmten Bereich der Spektralwerte (x(1), ..., x(n)) ausgeführt wird.

4. Verfahren nach einem der vorhergehenden Ansprüche, bei dem ein Hinweis, daß die Prädiktion verwendet wurde, Prädiktionskoeffizienten und gegebenenfalls Frequenzbereichsangaben für die Prädiktion (804) in den Seiteninformationen des codierten Audiosignals vorhanden sind.

5. Verfahren nach einem der vorhergehenden Ansprüche, bei dem durch die Prädiktion (804) erzeugte Filterkoeffizienten in Seiteninformationen des codierten Audiosignals eingebracht werden (208).

6. Verfahren nach einem der vorhergehenden Ansprüche, bei dem die Rauschsubstitution (310) skalenfaktorbandweise durchgeführt wird.

7. Verfahren nach einem der vorhergehenden Ansprüche, bei dem der Schritt des Rauschsubstituierens (310) das Berechnen der Energie der spektralen Restwerte (x_{R}(1), ..., x_{R}(n)) in einem erfaßten Rauschbereich, der ein Skalenfaktorband aufweist, umfaßt, wobei die die Rauschsubstitution betreffenden Informationen in den Seiteninformationen des codierten Audiosignals an der im Bitstrom vorgesehenen Stelle für den/die Skalenfaktoren für das eine Skalenfaktorband stehen, und die Energie der Fehlerrestwerte in einem entsprechenden Rauschbereich umfassen.

8. Verfahren nach einem der vorhergehenden Ansprüche, bei dem während des Codierens die spektralen Restwerte, die nicht in Rauschbereichen liegen, unter Berücksichtigung der psychoakustischen Maskierung quantisiert werden, und bei dem während des Decodierens die quantisierten spektralen Restwerte, die nicht in Rauschbereichen liegen, requantisiert und dann der inversen Prädiktion unterzogen werden, um die Spektralwerte (x(1), ..., x(n)) zu erhalten.

## Claims

1. A method for coding an audio signal, comprising the following steps:
transforming (202) a temporal audio signal to the frequency domain in order to obtain spectral values (x(1), ..., x(n)) of the temporal audio signal;
performing a prediction of the spectral values in relation to frequency (804) in order to obtain spectral residual values (x_{R}(1), ..., x_{R}(n));
detecting (310) noise areas in the spectral residual values;
noise-substituting (310) the spectral residual values in the noise areas; and
introducing (208) information concerning the noise areas and the noise-substitution in side information of a coded audio signal.

2. A method for decoding a coded audio signal, comprising the following steps:
receiving (212) the coded audio signal;
detecting (214) information in the side information that relates to noise substitution and to noise areas of the spectral residual values;
generating (312) spectral noise residual values on the basis of the detected information in the noise areas;
performing an inverse prediction (900) in relation to frequency in order to obtain spectral values from the noise-substituted spectral noise residual values; and
transforming (218) the spectral values to the time domain in order to obtain a decoded audio signal.

3. The method of claim 1 or 2, wherein the prediction (804) or inverse prediction (900), respectively, is carried out only for a specific range of the spectral values (x(1), ..., x(n)).

4. The method of any of the preceding claims, wherein a hint that prediction was used, prediction coefficients and, optionally, frequency range information for the prediction (804) are contained in the side information of the coded audio signal.

5. The method of any of the preceding claims, wherein filter coefficients generated by prediction (804) are introduced into side information of the coded audio signal (208).

6. The method of any of the preceding claims, wherein the noise substitution (310) is carried out in the form of scale factor bands.

7. The method of any of the preceding claims, wherein the step of noise substitution (310) comprises calculating of the energy of the spectral residual values (x_{R}(1), ..., x_{R}(n)) in a detected noise area having a scale factor band, the information contained in the side information of the coded audio signal and concerning noise substitution being contained at the location provided in the bit flow for the scale factor(s) for the one scale factor band and comprising the energy of the error residual values in a corresponding noise area.

8. The method of any of the preceding claims, wherein, during coding, the spectral residual values not located in noise areas are quantized in consideration of psychoacoustic masking, and wherein, during decoding, the quantized spectral residual values not located in noise areas are requantized and then subjected to inverse prediction in order to obtain the spectral values (x(1), ..., x(n)).

## Revendications

1. Procédé de codage d'un signal audio, aux étapes suivantes consistant à :
transformer (202) un signal audio dans le temps à la plage de fréquence, pour obtenir des valeurs spectrales (x(1), ..., x(n)) du signal audio dans le temps ;
effectuer une prédiction des valeurs spectrales sur la fréquence (804), pour obtenir des valeurs spectrales résiduelles (x_{R}(1), ..., x_{R}(n)) ;
détecter (310) des plages de bruit dans les valeurs spectrales résiduelles ;
substituer le bruit (310) des valeurs spectrales résiduelles dans les plages de bruit ; et
entrer (208) des informations relatives aux plages de bruit ainsi que la substitution de bruit dans les informations latérales d'un signal audio codé.

2. Procédé de décodage d'un signal audio codé, aux étapes suivantes consistant à :
recevoir (212) le signal audio codé ;
détecter (214) des informations dans les informations latérales se rapport à une substitution de bruit et à des plages de bruit des valeurs spectrales résiduelles ;
générer (312) des valeurs spectrales résiduelles à bruit sur base des informations détectées dans les plages de bruit ;
effectuer une prédiction inverse (900) sur la fréquence, pour obtenir, à partir des valeurs spectrales résiduelles à bruit, des valeurs spectrales ; et
transformer (218) les valeurs spectrales à la plage de temps, pour obtenir un signal audio décodé.

3. Procédé suivant la revendication 1 ou 2, dans lequel la prédiction (804) ou la prédiction inverse (900) n'est effectuée que pour une plage déterminée des valeurs spectrales (x(1), ..., x(n)).

4. Procédé suivant l'une des revendications précédentes, dans lequel comme indication que la prédiction a été utilisée sont présents dans les informations latérales du signal audio codé des coefficients de prédiction et éventuellement des indications de plage de fréquence pour la prédiction (804).

5. Procédé suivant l'une des revendications précédentes, dans lequel des coefficients de filtre générés par la prédiction (804) sont introduits dans les informations latérales du signal audio codé (208).

6. Procédé suivant l'une des revendications précédentes, dans lequel la substitution de bruit (310) est effectuée par bande de facteurs d'échelle.

7. Procédé suivant l'une des revendications précédentes, dans lequel l'étape de substitution de bruit (310) comporte le calcul de l'énergie des valeurs spectrales résiduelles (x_{R}(1), ..., X_{R}(n)) dans une plage de bruit détectée présentant une bande de facteurs d'échelle, les informations concernant la substitution de bruit dans les informations latérales du signal audio codé se situent à l'endroit, prévu dans le courant de bits, du/des facteurs d'échelle pour l'une bande de facteurs d'échelle, et contiennent l'énergie des valeurs d'erreur résiduelles dans une plage de bruit correspondante.

8. Procédé suivant l'une des revendications précédentes, dans lequel, lors du codage, les valeurs spectrales résiduelles non situées dans des plages de bruit sont quantifiées en tenant compte du masquage psychoacoustique, et dans lequel, lors du décodage, les valeurs spectrales résiduelles quantifiées non situées dans des plages de bruit sont requantifiées et ensuite soumises à la prédiction inverse, pour obtenir les valeurs spectrales (x(1), ..., x(n)).
